# EUROPEAN PATENT SPECIFICATION

(11) **EP 3 525 518 B1**
(45) Date of publication and mention of the grant of the patent: **23.08.2023**
(21) Application number: 17838667.8
(22) Date of filing: 07.08.2017
(51) Int. Cl.: H04W 48/06, H04W 48/08, H04W 48/10, H04W 74/08, H04W 74/00

(54) **ACCESS CONTROL METHOD, DEVICE AND SYSTEM**
ZUGANGSTEUERUNGSVERFAHREN, -VORRICHTUNG UND -SYSTEM
PROCÉDÉ DE COMMANDE D'ACCÈS, DISPOSITIF ET SYSTÈME

(30) Priority: 12.08.2016 CN 201610664606
(43) Date of publication of application: 14.08.2019
(73) Proprietor: ZTE Corporation, Shenzhen, Guangdong 518057 (CN)
(72) Inventor: DAI, Qian, Shenzhen, Guangdong 518057 (CN)
(74) Representative: Vossius & Partner Patentanwälte Rechtsanwälte mbB
(86) International application number: PCT/CN2017/096181
(87) International publication number: WO 2018/028537

(56) References cited:
- WO-A1-2018/178249
- CN-A- 104 254 135
- CN-A- 104 284 442
- CN-A- 104 348 580
- CN-A- 105 101 454
- CN-A- 105 165 099
- CN-A- 105 636 156
- ALCATEL-LUCENT ET AL: "Coverage Enhancement Targets", 3GPP DRAFT; R1-144695 - REL-13 MTC - COVERAGE ENHANCEMENT TARGETS V02, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG1, no. San Francisco, USA; 20141117 - 20141121 17 November 2014 (2014-11-17), XP050875778, Retrieved from the Internet: URL:http://www.3gpp.org/ftp/Meetings_3GPP_ SYNC/RAN1/Docs/ [retrieved on 2014-11-17]
- LG ELECTRONICS INC: "Access barring for CE level", 3GPP DRAFT; R2-1705675 ACCESS BARRING FOR CE LEVEL (FEMTC), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Hangzhou, China; 20170515 - 20170519 6 May 2017 (2017-05-06), XP051264964, Retrieved from the Internet: URL:http://www.3gpp.org/ftp/tsg_ran/WG2_RL 2/TSGR2_98/Docs/ [retrieved on 2017-05-06]

## Description

### TECHNICAL FIELD

The present invention relates to communications and, in particular, to access control methods and corresponding access control devices.

### BACKGROUND

In order to support machine type communication terminals (such as a sensor, a smart-home apparatus, a smart-grid monitoring apparatus, etc.), enhance machine type communication (eMTC) using a narrow-band air interface technology, and NarrowBand Internet of Things (NBIoT) have been introduced into the Long-Term Evolution (LTE) system in the related art. The bandwidth of an eMTC system is 1.4 MHz and the bandwidth of an NBIoT system is 180 kHz. These two systems are designed to carry machine type communication with infrequent service data characterized by small traffic and high latency tolerance, thereby avoiding the influence of small data of a large number of machine type terminals on spectrum efficiency of a broadband LTE system, and increasing user capacity carried by the unit bandwidth.

An LET base station may simultaneously deploy multiple narrowband eMTC or NBIoT frequency points in a co-site mode, and allocate spectrum resources for the eMTC or NBIOT system in an inband mode.

The applicant finds that with the increase of machine type services, real-time voice and video services also emerge on MTC terminals. Therefore, eMTC and NBIoT systems may also support real-time services characterized by frequent arrival of data packet, sensitivity in latency, and large data traffic. Due to the inherent resource limitation and the introduction of coverage enhancement technology, the capability of loading large traffic data of narrowband eMTC or NBIoT cannot be compared with that of the LTE system, thereby causing overload of the narrowband system if the number of terminals supporting real-time services increases.

In view of the above problem in the related art, no effective solution has yet been proposed.

CN 105 165 099 A relates to a random access method and device, relating to the field of communications, comprising: obtaining at least one stored set of PRACH configuration information, said at least one set of PRACH configuration information being carried in the system information sent by the base station; parsing said at least one set of PRACH configuration information to obtain the corresponding initial PRACH resource; beginning from said initial PRACH resource to send a preamble to the base station, enabling the base station to establish a connection to the terminal equipment according to said preamble.

Alcatel-Lucent et al: "Coverage Enhancement Target", 3GPP Draft, R1-144695 relates to a discussion on coverage enhancement targets. In detail, this draft relates to physical channels that each have a different coverage enhancement target for different UE category.

### SUMMARY

The invention is specified by the independent claims. Preferred embodiments are defined in the dependent claims.

Embodiments of the present invention provide access control methods and corresponding access control devices to solve a problem of excessive system load caused by an inefficient use of user plane resources in the related art.

Because the access control information associated with the coverage enhancement level is sent, a terminal on a receiving side may determine whether the terminal capability and the transmission service satisfy the access condition based on the access control information, thereby solving the problem of excessive system load caused by an inefficient use of user plane resources in the related art and ensuring the resource utilization while controlling the load of the system.

### BRIEF DESCRIPTION OF DRAWINGS

The drawings described herein are used to provide a further understanding of the present invention and form a part of the present application. The exemplary embodiments and descriptions thereof in the present invention are used to explain the present invention and not to limit the present invention in any improper way. In the drawings:
FIG. 1 is a flowchart of an access control method according to an embodiment of the present invention;
FIG. 2 is a flowchart of another access control method according to an embodiment of the present invention;
FIG. 3 is a block diagram of an access control system according to an embodiment of the present invention;
FIG. 4 is a flowchart of a scheme according to a specific embodiment 1 of the present invention; and
FIG. 5 is a flowchart of a scheme according to a specific embodiment 2 of the present invention.

### DETAILED DESCRIPTION

The embodiments "Embodiment 1" and "Specific embodiment 2" fall under the scope of the appended claims. The other embodiments do not fall under the scope of the claims and are to be regarded as mere examples useful to better understand the invention.

Hereinafter the present invention will be described in detail with reference to the drawings in conjunction with the embodiments. It is to be noted that if not in collision, the embodiments and features therein in the present invention may be combined with each other.

It is to be noted that the terms "first", "second" and the like in the description, claims and above accompanying drawings of the present invention are used to distinguish between similar objects and are not necessarily used to describe a particular order or sequence.

### Embodiment 1

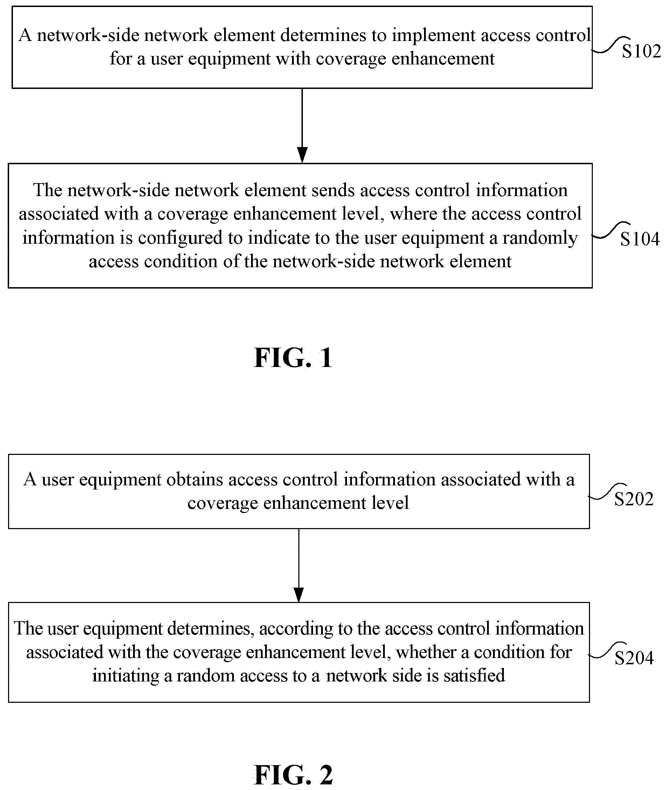

The embodiment provides an access control method. FIG. 1 is a flowchart of an access control method according to an embodiment of the present invention. As shown in FIG. 1, the method includes steps described below.

In step S102, a network-side network element determines to implement access control for a user equipment with coverage enhancement.

In step S104, the network-side network element sends access control information associated with a coverage enhancement level, where the access control information is configured to indicate to the user equipment a random access condition of the network-side network element.

In the steps described above, the network-side network element determines to implement the access control for the user equipment with coverage enhancement, and sends the access control information associated with the coverage enhancement level, where the access control information is configured to indicate to the user equipment the random access condition of the network-side network element. Because the access control information associated with the coverage enhancement level is sent, a terminal on a receiving side may determine whether the terminal capability and the transmission service satisfy the access condition based on the access control information, thereby solving the problem of excessive system load caused by an inefficient use of user plane resources in the related art and ensuring the resource utilization while controlling the load of the system.

Alternatively, the execution object of the steps described above, the network-side network element, may be an access network element or a core network element, such as a base station, and may be implemented by a processor and a radio frequency circuit of the base station, but is not limited thereto.

Alternatively, the step in which the network-side network element sends the access control information associated with the coverage enhancement level includes: sending, by the network-side network element, the access control information by broadcasting a system information.

Alternatively, the access control information includes, but is not limited to: an upper limit of the coverage enhancement level allowing access of the user equipment, an upper limit of a coverage enhancement repetition factor allowing access of the user equipment or an upper limit of a coverage enhancement mode allowing access of the user equipment, a lower limit of the coverage enhancement level not allowing the random access of the user equipment, a lower limit of the coverage enhancement repetition factor not allowing the random access of the user equipment or a lower limit of the coverage enhancement mode not allowing the random access of the user equipment, a range of the coverage enhancement level, a range of the coverage enhancement repetition factor or a range of the coverage enhancement mode allowing the random access of the user equipment, and a range of the coverage enhancement level, a range of the coverage enhancement repetition factor or a range of the coverage enhancement mode not allowing the random access of the user equipment.

Alternatively, the access control information includes one or more categories. Each category of the access control information is configured with a dedicated coverage enhancement level. Alternatively, a mode of categorizing the one or more categories of the access control information includes at least one of categorizing the one or more categories of the access control information according to a service type and categorizing the one or more categories of the access control information according to capability of the user equipment.

Alternatively, a categorizing dimension of the service type includes a real-time performance of the service and a rate required by the service.

Alternatively, a categorizing granularity of the real-time performance of the service includes one of: categorizing the service according to whether the service is real-time or non-real-time, and categorizing the service according to different levels of latency requirements; or a categorizing granularity of the rate required by the service includes one of: categorizing the services into high rate services and low rate services, or categorizing the services according to different levels of the rate.

Alternatively, the service type is categorized according to an actual service type into a voice service, a video streaming service, a wearable device service and a health monitoring service. Alternatively, a categorizing dimension of the capability of the user equipment includes: whether to support a rate higher than a preset rate, whether to support a bandwidth greater than a preset bandwidth, whether to support multi-narrowband transmission, and whether to support coverage enhancement.

The access control information further includes a preset probability with which the target user equipment satisfying the access control condition is allowed to perform random access, or a preset probability with which the target user equipment satisfying the access control condition is not allowed to perform random access.

Alternatively, the preset probability is set by using a scale factor less than 1, or a 1-bit indication is set for each access class of the user equipment, where the 1-bit indication indicates allowing access or not allowing access.

This embodiment provides another access control method. FIG. 2 is a flowchart of another access control method according to an embodiment of the present invention. As shown in FIG. 2, the method includes steps described below.

In step S202, a user equipment obtains access control information associated with a coverage enhancement level.

In step S204, the user equipment determines whether a condition for initiating a random access to a network side according to the access control information associated with the coverage enhancement level is satisfied.

Alternatively, the execution object of the steps described above may be a terminal, such as a cellphone, and may be implemented by a processor and a radio frequency circuit of the terminal, but is not limited thereto.

Alternatively, the step in which the user equipment obtains the access control information associated with the coverage enhancement level includes: obtaining, by the user equipment, the access control information associated with the coverage enhancement level by reading a broadcasted system information.

Alternatively, the access control information is configured to describe following information (not limited to): an upper limit of the coverage enhancement level allowing access of the user equipment, an upper limit of a coverage enhancement repetition factor allowing access of the user equipment or an upper limit of a coverage enhancement mode allowing access of the user equipment, a lower limit of the coverage enhancement level not allowing the access of the user equipment, a lower limit of the coverage enhancement repetition factor not allowing the access of the user equipment or a lower limit of the coverage enhancement mode not allowing the access of the user equipment, a range of the coverage enhancement level, a range of the coverage enhancement repetition factor or a range of the coverage enhancement mode allowing the random access of the user equipment, and a range of the coverage enhancement level, a range of the coverage enhancement repetition factor or a range of the coverage enhancement mode not allowing the random access of the user equipment.

Alternatively, the access control information includes one or more categories. Each category of the access control information is configured with a dedicated coverage enhancement level. Alternatively, a mode of categorizing the one or more categories of the access control information includes at least one of categorizing the one or more categories of the access control information according to a service type and categorizing the one or more categories of the access control information according to capability of the user equipment.

Alternatively, a categorizing dimension of the service type includes a real-time performance of the service and a rate required by the service.

Alternatively, a categorizing granularity of the real-time performance of the service includes one of: categorizing the service into a real-time service and a non-real-time service, and categorizing the service according to different levels of latency requirements; or a categorizing granularity of the rate required by the service includes one of: categorizing the service into a high rate service and a low rate service, or categorizing the service according to different levels of the rate. Alternatively, the service type is categorized according to an actual service type into a voice service, a video streaming service, a wearable device service and a health monitoring service. Alternatively, a categorizing dimension of the capability of the user equipment includes: whether to support a rate higher than a preset rate, whether to support a bandwidth greater than a preset bandwidth, whether to support multi-narrowband transmission, and whether to support coverage enhancement.

Alternatively, the step in which the user equipment determines whether the condition for initiating the random access to the network side is satisfied according to the access control information associated with the coverage enhancement level includes the following steps. The user equipment checks the access control information, and determines that the condition for initiating the random access to the network side is satisfied if a current coverage enhancement level of the user equipment is within a range of the coverage enhancement level allowing access. Or, in a case in which the access control information includes one or more categories, the user equipment checks a category to which the user equipment belongs, and determines whether the current coverage enhancement level of the user equipment is within the range of the coverage enhancement level allowing access according to the access control information corresponding to the category to which the user equipment belongs, and determines that the condition for initiating the random access to the network side is satisfied if the current coverage enhancement level of the user equipment is within the range of the coverage enhancement level allow the random access.

Alternatively, in a case in which an access control mechanism which is not associated with the coverage enhancement level exists, before or after the access control mechanism which is not associated with the coverage enhancement level, the user equipment determines whether the condition for initiating the random access to the network side is satisfied according to the access control information associated with the coverage enhancement level. That is, if access control mechanism which is not associated with the coverage enhancement level needs to be run, the access control mechanism based on the coverage enhancement level in this embodiment is run before or after the access control mechanism which is not associated with the coverage enhancement level.

The access control information further includes: a preset probability with which the target user equipment satisfying the access control condition is allowed to perform random access, or a preset probability with which the target user equipment satisfying the access control condition is allowed to perform random access.

Alternatively, the preset probability is set by using a scale factor less than 1, or a 1-bit indication is set for each access class (AC) of the user equipment, where the 1-bit indication indicates allowing access or not allowing access.

From the description of the implementation modes described above, it will be apparent to those skilled in the art that the method in the embodiments described above may be implemented by software plus a necessary general-purpose hardware platform, or may of course be implemented by hardware. However, in many cases, the former is a preferred implementation mode. Based on this understanding, the solution provided by the present invention substantially, or the part contributing to the related art, may be embodied in the form of a software product. The computer software product is stored in a storage medium (such as a read-only memory (ROM)/random access memory (RAM), a magnetic disk or an optical disk) and includes several instructions for enabling a terminal device (which may be a mobile phone, a computer, a server, a network device, etc.) to execute the method according to each embodiment of the present invention.

### Embodiment 2

The embodiment further provides an access control device and system for implementing the embodiments and preferred embodiments described above. What has been described will not be repeated. As used below, the term "module" may be software, hardware or a combination thereof capable of implementing preset functions. The apparatus in the embodiment described below is preferably implemented by software, but implementation by hardware or by a combination of software and hardware is also possible and conceivable.

This embodiment provides an access control device. The device is applied to a network-side network element and includes a determining module, which is configured to determine to implement access control for a user equipment with coverage enhancement, and a sending module, which is configured to send access control information associated with a coverage enhancement level. The access control information is configured to indicate to the user equipment a random access condition of the network-side network element.

Alternatively, the access control information is configured to describe following information (not limited to): an upper limit of the coverage enhancement level, an upper limit of a coverage enhancement repetition factor or an upper limit of a coverage enhancement mode allowing access of the user equipment, a lower limit of the coverage enhancement level, a lower limit of the coverage enhancement repetition factor or a lower limit of the coverage enhancement mode not allowing the random access of the user equipment, a range of the coverage enhancement level, a range of the coverage enhancement repetition factor or a range of the coverage enhancement mode allowing the random access of the user equipment, and a range of the coverage enhancement level, a range of the coverage enhancement repetition factor or a range of the coverage enhancement mode not allowing the random access of the user equipment.

This embodiment further provides another access control device. The device is applied to a terminal-side user equipment and includes an obtaining module, which is configured to obtain access control information associated with a coverage enhancement level, and a determining module, which is configured to determine whether a condition for initiating a random access to a network side is satisfied according to the access control information associated with the coverage enhancement level is satisfied.

Alternatively, the access control information is configured to describe following information (not limited to): an upper limit of the coverage enhancement level, an upper limit of a coverage enhancement repetition factor or an upper limit of a coverage enhancement mode allowing access of the user equipment, a lower limit of the coverage enhancement level, a lower limit of the coverage enhancement repetition factor or a lower limit of the coverage enhancement mode not allowing the random access of the user equipment, a range of the coverage enhancement level, a range of the coverage enhancement repetition factor or a range of the coverage enhancement mode allowing the random access of the user equipment, and a range of the coverage enhancement level, a range of the coverage enhancement repetition factor or a range of the coverage enhancement mode not allowing the random access of the user equipment.

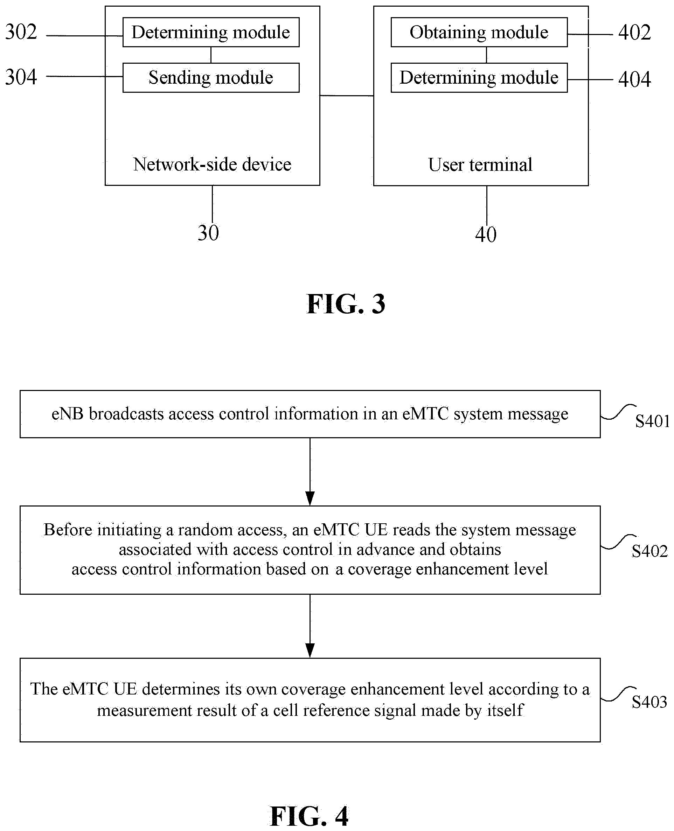

FIG. 3 is a block diagram of an access control system according to an embodiment of the present invention. As shown in FIG. 3, the system includes a network-side device 30 and a terminal-side user terminal 40. The network-side device 30 includes a determining module 302, which is configured to determine to implement access control for a user equipment with coverage enhancement, and a sending module 304, which is configured to send access control information associated with a coverage enhancement level. The access control information is configured to indicate to the user equipment a random access condition of a network-side network element. The user terminal 40 includes an obtaining module 402, which is configured to obtain the access control information associated with the coverage enhancement level, and a determining module 404, which is configured to determine, according to the access control information associated with the coverage enhancement level, whether a condition for initiating a random access to the network side is satisfied.

The access control information further includes a preset probability with which the target user equipment satisfying the access control condition is allowed to perform random access, or a preset probability with which the target user equipment satisfying the access control condition is not allowed to perform random access.

Alternatively, the preset probability is set by using a scale factor less than 1, or a 1-bit indication is set for each access class of the user equipment, where the 1-bit indication indicates allowing access or not allowing access.

Alternatively, the access control information is configured to describe following information (not limited to): an upper limit of the coverage enhancement level, an upper limit of a coverage enhancement repetition factor or an upper limit of a coverage enhancement mode allowing access of the user equipment, a lower limit of the coverage enhancement level, a lower limit of the coverage enhancement repetition factor or a lower limit of the coverage enhancement mode not allowing the access of the user equipment, a range of the coverage enhancement level, a range of the coverage enhancement repetition factor or a range of the coverage enhancement mode allowing the random access of the user equipment, and a range of the coverage enhancement level, a range of the coverage enhancement repetition factor or a range of the coverage enhancement mode not allowing the random access of the user equipment.

It is to be noted that the various modules described above may be implemented by software or hardware. Implementation by hardware may, but is not limited to, be performed in the following modes: the various modules described above are located in a same processor, or the various modules described above are located in their respective processors in any combination form.

### Embodiment 3

The present embodiment is an alternative embodiment of the present invention. A detailed description of the present application is given below in conjunction with specific embodiments.

### Specific embodiment 1

An LTE cMTC system is used as an example. The embodiment describes coarse- granularity access control of an eMTC access network on an eMTC user equipment (UE) categorized according to a service rate in a coverage enhancement scenario.

FIG. 4 is a flowchart of a scheme according to a specific embodiment 1 of the present invention. A precondition of the embodiment is described below.

The eMTC access network and an LTE access network are deployed in such a way that the eMTC access network and the LTE access network share base stations. The system bandwidth of the LTE access network is 10 MHz. The eMTC access network is deployed within the system bandwidth of the LTE access network in an inband mode. It is assumed that the eMTC access network is currently heavily loaded, and there are a few idle air interface resources. In this case, although the eMTC access network can still accept a small number of high rate users, the eMTC access network cannot support the high rate users to use a mode of a high coverage enhancement level. Therefore, the eMTC access network determines to restrict the random access of the high rate users with high coverage enhancement level.

In step 401, an eNB (a base station) broadcasts following access control information in an eMTC system information (e.g., in SIB2 or SIB14):

| | |
|---|---|
| an upper limit of a coverage enhancement mode allowing the access of a high rate UE | a coverage enhancement mode A |

The coverage enhancement mode A refers to a mode of a low coverage enhancement level, and accordingly, a coverage enhancement mode B refers to a mode of a high coverage enhancement level.

For example, in the existing eMTC system, the coverage enhancement mode A of a physical downlink shared channel (PDSCH) and a physical uplink shared channel (PUSCH) corresponds to coverage enhancement levels with coverage repetition factors [1, 2, 4, 8] (the maximum coverage repetition factor may be configured by the base station), and their coverage enhancement mode B corresponds to coverage enhancement levels with coverage repetition factors [4, 8, 16, 32, 64, 128, 256, 512] (the maximum coverage repetition factor may be configured by the base station).

The coverage enhancement mode A of a physical random access channel (PRACH) corresponds to coverage enhancement levels 1 and 0, and its coverage enhancement mode B corresponds to coverage enhancement levels 2 and 3. The coverage repetition factor respectively corresponding to the coverage enhancement levels 0 to 3 is chose from [1, 2, 4, 8, 16, 32, 64, 128] by the base station and configured by the base station.

The coverage enhancement mode A and the coverage enhancement mode B of each of the M-physical downlink control channel (M-PDCCH) and the physical downlink control channel (PUCCH) also have different coverage enhancement levels.

In step 402, before initiating a random access, the eMTC UE reads the system information associated with the access control and obtains access control information based on the coverage enhancement level.

In step 403, the eMTC UE determines its own coverage enhancement level according to a measurement result of a cell reference signal made by the eMTC UE. If it is determined according to the measurement result that the UE may initiate the random access without enabling the coverage enhancement or with only enabling the coverage enhancement mode A, it is determined according to the obtained access control information associated with the coverage enhancement level that the UE may initiate the random access in the current cell. If it is determined according to the measurement result that the UE needs to enable the coverage enhancement mode B to initiate the random access, it is determined according to the access control information associated with the coverage enhancement level that the UE cannot initiate the random access in the current cell according to the obtained.

### Specific embodiment 2

An LTE eMTC system is used as an example. The embodiment describes fine- granularity access control of an eMTC access network on an eMTC user equipment (UE) categorized according to a service rate in a coverage enhancement scenario.

Referring to the scenario of the specific embodiment 1, a precondition of the embodiment is described below.

The eMTC access network and the LTE access network are deployed in a mode in which base stations are shared. The system bandwidth of the LTE access network is 10 MHz. The eMTC access network is deployed within the system bandwidth of the LTE access network in an inband mode. It is assumed that the eMTC access network currently has a heavy load, and there are a few idle air interface resources. In this case, although the eMTC access network can still accept a small number of high rate users, the eMTC access network cannot support the high rate users to use the mode of a high coverage enhancement level. Therefore, the eMTC access network determines to restrict users with high enhancement coverage level and using high rate services. The restriction may be in different granularities.

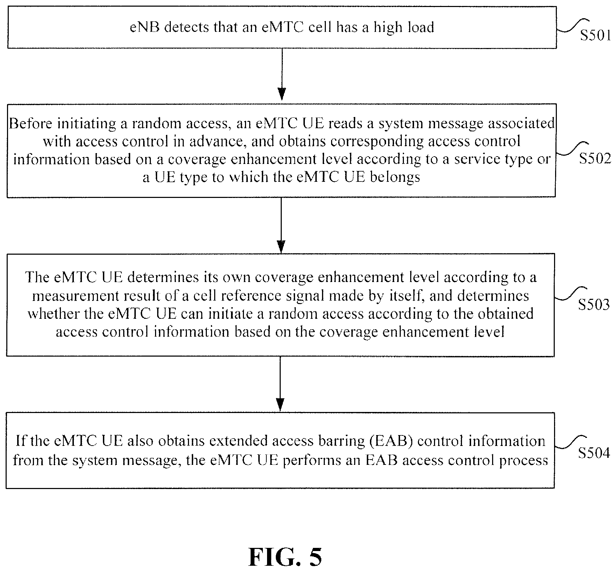

FIG. 5 is a flowchart of a scheme according to a specific embodiment 2 of the present invention. The process is described below.

In step 501, the eNB (a base station) detects that the load of an eMTC cell is high, and the load of the LTE system is also high, and cannot schedule more idle resources for the eMTC. Therefore, the eNB decides to restrict the users of the eMTC using high rate services from using the high coverage enhancement level so as to reduce the pressure on air resources. In an eMTC system information (e.g., in SIB2 or SIB 14), the eNB broadcasts the access control information for terminals with the coverage enhancement. The content of the access control information includes two parts: a restricted user object, and a restricted coverage enhancement level corresponding to the restricted object.

The restricted user object includes: the UE of any type (that is, no limitation to the UE type or the service type).

The services may be categorized according to the service type and, for example, the services may be categorized according to the real-time performance of the service into a real-time service (a low latency service or an ultra-low latency service), a common service and a latency-insensitive service (or a latency-tolerant service). In another example, the services may be categorized according to a rate required by the service into a high rate service, a common rate service and a low rate service. The above categorizing may also be divided into finer levels of granularity and, for example, it may be divided into more levels according to a latency requirement or a value of the rate.

The services may be categorized according to the specific service types into a voice service, a video streaming service, a game service, a smart wearable device service and a health monitoring service.

The services may be categorized according to capability of the UE: whether to support a rate higher than a preset rate, whether to support a bandwidth greater than a preset bandwidth, whether to support multi-narrowband transmission, and whether to support coverage enhancement.

The coverage enhancement levels may be categorized according to different granularities.

In an example, the coverage enhancement levels may be categorized into a level without coverage enhancement and a level with the coverage enhancement.

In an example, the coverage enhancement levels may be categorized into a level without coverage enhancement, a coverage enhancement mode A and a coverage enhancement mode B. In an example, the coverage enhancement levels may be categorized into a level without coverage enhancement, a coverage enhancement level 0, a coverage enhancement level 1, a coverage enhancement level 2 and a coverage enhancement level 3 (in the eMTC system, coverage enhancement levels 0 and 1 adopted by the random access channel belong to the coverage enhancement mode A, and coverage enhancement levels 2 and 3 belong to the coverage enhancement mode B).

In another example, the coverage enhancement levels may be categorized into a level without coverage enhancement and coverage enhancement repetition factors {1, 2, 4, 8, 15, 32, 64, 128, ...}.

The restriction form of the access control information includes: an upper limit of the coverage enhancement level or an upper limit of the coverage enhancement mode allowing the random access of the user equipment, a lower limit of the coverage enhancement level or a lower limit of the coverage enhancement mode not allowing the random access of the user equipment, or a range of the coverage enhancement level or a range of the coverage enhancement mode allowing/ not allowing the random access of the user equipment.

In an example, the access control information is defined as:

| | |
|---|---|
| the upper limit of the coverage enhancement level allowing the access of the UE | no coverage enhancement |

This access control information means that any type of the UE is not allowed to access to the network using the coverage enhancement technology.

In an example, the access control information is defined as:

| | |
|---|---|
| the voice service (the lower limit of the coverage enhancement level not allowing access) | the coverage enhancement mode B |
| the video streaming service (the lower limit of the coverage enhancement level not allowing access) | the coverage enhancement mode A |

This access control information means that the UE which initiates the voice service is allowed to access to the network with the coverage enhancement mode A or without coverage enhancement; and that the UE which initiates the video stream service is allowed to access to the network without coverage enhancement.

In another example, the access control information is defined as:

| | |
|---|---|
| the high rate service (the range of the coverage enhancement level allowing the access) | [no coverage enhancement] |
| the common rate service (the range of the coverage enhancement level allowing the access) | [no coverage enhancement to the coverage enhancement level 1] |
| the low rate service (the range of the coverage enhancement level allowing the access) | [no coverage enhancement to the coverage enhancement level 3] |

This access control information means that the UE which initiates the high rate service is allowed to access to the network without coverage enhancement; that the UE which initiates the common rate stream service is allowed to access to the network with [no coverage enhancement, the coverage enhancement level 0, the coverage enhancement level 1]; and that the UE which initiates the low rate stream service is allowed to access to the network with [no coverage enhancement, the coverage enhancement level 0, the coverage enhancement level 1, the coverage enhancement level 2, the coverage enhancement level 3].

Alternatively, in order to implement the access control with more flexibility, the controlled target user equipment may be restricted using a probability manner, that is, the target user equipment satisfying an access control condition has a preset probability of being allowed to perform random access, or the target user equipment satisfying the access control condition has a preset probability of not being allowed to perform the random access.

The setting form of the preset probability includes: setting a scale factor less than 1, or setting a 1-bit indication for each access class (AC), where the 1-bit indication indicates allowing access or not allowing access.

In an example, the access control information is defined as:

| | | |
|---|---|---|
| the high rate service (the range of the coverage enhancement level allowing access) | repetition factor [1] | 0.1 |
| the common rate service (the range of the coverage enhancement level allowing access) | repetition factors [2 to 8] | 0.3 |
| the low rate service (the range of the coverage enhancement level allowing access) | repetition factors [16 to 32] | 0.5 |

If the first two conditions (e.g., the UE initiates the high rate service and the repetition factor [1] is used) are satisfied, a terminal may determine whether the terminal can initiate the random access. If it is less than 0.1, the terminal is allowed to perform access; otherwise, the terminal is not allowed to perform access.

The access control information means that the UEs initiating the high rate service can only use the repetition factor [1] to perform the random access, and only 10% of these UEs can initiate the random access; that the UEs initiating the common rate service can only use the repetition factors [2 to 8] to perform the random access, and only 30% of these UEs can initiate the random access; and that the UEs initiating the low rate service can only use the repetition factors [16 to 32] to perform the random access, and only 50% of these UEs can initiate the random access.

In another example, the access control information is defined as:

| | | |
|---|---|---|
| the high rate service (the range of the coverage enhancement level allowing access) | repetition factor [1] | [0,1,1,1,1,1,1,1,1,1] |
| the common rate service (the range of the coverage enhancement level allowing access) | repetition factors [2 to 8] | [0,0,0,1,1,1,1,1,1,1] |
| the low rate service (the range of the coverage enhancement level allowing access) | repetition factors [16 to 32] | [0,0,0,0,0,1,1,1,1,1] |

The access control information means that the UEs initiating the high rate service can only use the repetition factor [1] to perform the random access, and only the UEs belonging to the AC 0 can initiate the random access; that the UEs initiating the common rate service can only use the repetition factors [2 to 8] to perform the random access, and only the UEs belonging to the ACs 0 to 2 can initiate the random access; and that the UEs initiating the low rate services can only use the repetition factors [16 to 32] to perform the random access, and only the UEs belonging to the ACs 0 to 4 can initiate the random access. The last column of the access control information is a 10-bit field, which is configured to identify that, in the UEs of the ACs 0 to 9, the UE of which AC or which ACs can perform the random access.

In step 502, before initiating the random access, the eMTC UE reads a system information associated with access control and obtains corresponding access control information associated with the coverage enhancement level according to the UE type or the service type to which the eMTC UE belongs.

In step 503, the eMTC UE determines its own coverage enhancement level according to a measurement result of a cell reference signal, and determines whether the eMTC UE can initiate the random access according to the obtained access control information associated with the coverage enhancement level.

In step 504 (optional), if the eMTC UE also obtains extended access barring (EAB) control information from the system information (the EAB is one of existing control mechanisms), the UE also needs to perform an EAB access control process. That is, the solution of the present invention described in steps 201 to 203 and the existing access control technology may exist at the same time. If the base station simultaneously broadcasts both the access control information of the solution of the present invention and the access control information of the existing access control technology, the UE needs to execute the two access controls at the same time. The UE may perform the solution of the present invention described in steps 201 to 203 first, or may perform the existing access control technology first.

### Specific embodiment 3

The LTE eMTC system is used as an example. The embodiment describes that a fine- granularity access control of an eMTC access network on eMTC user equipments (UEs) categorized according to real-time performance in a coverage enhancement scenario.

The system bandwidth used by an NBIoT system is 180 kHz, which is less than the 1.4 MHz of the eMTC system. Therefore, a terminal, if using coverage enhancement technology, occupies more air interface resources in the NBIoT system than in the eMTC system.

Assuming that an NBIoT access network and the eMTC access network are deployed by means of sharing base stations, the system bandwidth of the LTE access network is 10 MHz. The NBIoT access network is deployed within the system bandwidth of the LTE access network in an inband mode. It is assumed that the NBIoT access network currently has a heavy load and has a few idle air interface resources. In this case, although the NBIoT access network may still accept a small number of high rate users, the NBIoT access network cannot support the high rate users to use a high coverage enhancement level. Therefore, the NBIoT access network determines to restrict the access of certain types of high rate services and users of the high enhancement coverage level. The restriction may be in different granularities.

The method adopted in this specific embodiment is the same as the method in the eMTC system, and the solutions of Embodiment 1 and Embodiment 2 may be used in the NBIoT system. The access control information which is based on coverage enhancement may be sent in an NBIoT system information (e.g., in SIB2 or SIB14) to the NBIoT terminal.

For the specific process, reference may be made to process described in the specific embodiment 1 and the specific embodiment 2.

In embodiments described above, the type of the access network element, besides the eNB, may further include a small cell, a home base station, and other access network elements compatible with the EPC architecture.

### Embodiment 4

An embodiment of the present invention further provides a storage medium. Alternatively, in the embodiment, the storage medium may be configured to store program codes for executing the steps described below.

In step S1, access control is determined to be implemented for a user equipment with coverage enhancement.

In step S2, access control information associated with a coverage enhancement level is sent. The access control information is configured to indicate to the user equipment a random access condition of a network-side network element.

Alternatively, in this embodiment, the storage medium may include, but are not limited to, a U disk, a read-only memory (ROM), a random access memory (RAM), a mobile hard disk, a magnetic disk, an optical disk or another medium capable of storing program codes. Alternatively, in this embodiment, a processor executes the step of determining to implement access control for the user equipment with coverage enhancement according to the program codes stored in the storage medium.

Alternatively, in this embodiment, processor executes the step of sending the access control information associated with the coverage enhancement level according to the program codes stored in the storage medium, where the access control information is configured to indicate to the user equipment the random access condition of the network-side network element. Alternatively, for specific examples in this embodiment, reference may be made to the examples described in the above embodiments and optional implementations, which are not repeated in this embodiment.

Apparently, it should be understood by those skilled in the art that each of the above-mentioned modules or steps of the present invention may be implemented by a general-purpose computing device, the modules or steps may be concentrated on a single computing device or distributed on a network composed of multiple computing devices, and alternatively, the modules or steps may be implemented by program codes executable by the computing devices, so that the modules or steps may be stored in a storage device and executable by the computing devices. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present invention is not limited to any specific combination of hardware and software.

The above are only preferred embodiments of the present invention and are not intended to limit the present invention, which is defined by the appended claims. For those skilled in the art, the present invention may have various modifications and variations that fall within the scope of the appended claims.

## Claims

1. An access control method, comprising:
determining (S102), by a network-side network element, to implement access control for a user equipment with coverage enhancement; and
transmitting (S104), by the network-side network element, access control information associated with a plurality of Long-Term Evolution, LTE, enhanced Machine Type Communication, eMTC, coverage enhancement levels,
wherein the access control information is configured to indicate to the user equipment a condition for initiating random access to the network-side network element,
wherein the random access is based on a coverage enhancement level from the plurality of coverage enhancement levels allowed for the user equipment for the random access, and
wherein the access control information indicates that the user equipment that initiates a high rate service is allowed to access to the network-side network element without coverage enhancement,
wherein the access control information indicates that the user equipment that initiates a common rate stream service is allowed to access to the network-side network element with no coverage enhancement, coverage enhancement level 0, or coverage enhancement level 1, and
wherein the access control information indicates that the user equipment that initiates a low rate stream service is allowed to access to the network-side network element with the no coverage enhancement, the coverage enhancement level 0, the coverage enhancement level 1, coverage enhancement level 2, or coverage enhancement level 3.

2. The method according to claim 1, wherein the access control information is associated with a range of the coverage enhancement levels that allow random access by the user equipment.

3. An access control method, comprising:
obtaining (S202), by a user equipment, access control information associated with a plurality of Long-Term Evolution, LTE, enhanced Machine Type Communication, eMTC, coverage enhancement levels; and
determining (S204), by the user equipment and according to the access control information, whether a condition for initiating a random access to a network side is satisfied,
wherein the access control information indicates that the user equipment that initiates a high rate service is allowed to access to the network-side network element without coverage enhancement,
wherein the access control information indicates that the user equipment that initiates a common rate stream service is allowed to access to the network-side network element with no coverage enhancement, coverage enhancement level 0, or coverage enhancement level 1, and
wherein the access control information indicates that the user equipment that initiates a low rate stream service is allowed to access to the network-side network element with the no coverage enhancement, the coverage enhancement level 0, the coverage enhancement level 1, coverage enhancement level 2, or coverage enhancement level 3.

4. The method according to claim 3, wherein the access control information is associated with a range of the coverage enhancement levels that allow the random access of the user equipment.

5. An access control device, which is applied to a network-side network element, comprising a processor configured to implement a method comprising any one of claims 1 or 2.

6. An access control device, which is applied to a user equipment, comprising a processor configured to implement a method comprising any one of claims 3 or 4.

## Patentansprüche

1. Zugangssteuerverfahren, das aufweist:
Bestimmen (S102), durch ein netzwerkseitiges Netzwerkelement, um eine Zugangssteuerung für ein Benutzergerät mit Abdeckungserweiterung zu implementieren; und
Senden (S204), durch das netzwerkseitige Netzwerkelement, von Zugangssteuerinformationen, die mit mehreren Long-Term-Evolution-, LTE-, Enhanced-Machine-Type-Communication-, eMTC-, Abdeckungserweiterungsstufen verbunden sind,
wobei die Zugangssteuerinformationen konfiguriert sind, dem Benutzergerät eine Bedingung zum Einleiten eines Direktzugriffs auf das netzwerkseitige Netzwerkelement anzuzeigen,
wobei der Direktzugriff auf einer Abdeckungserweiterungsstufe aus den mehreren Abdeckungserweiterungsstufen basiert, die für das Benutzergerät für den Direktzugriff erlaubt sind, und
wobei die Zugangssteuerinformationen anzeigen, dass dem Benutzergerät, das einen Dienst mit hoher Rate einleitet, der Zugang zum netzwerkseitigen Netzwerkelement ohne Abdeckungserweiterung erlaubt ist,
wobei die Zugangssteuerinformationen anzeigen, dass dem Benutzergerät, das einen Stream-Dienst mit üblicher Rate einleitet, der Zugang zum netzwerkseitigen Netzwerkelement mit Nicht-Abdeckungserweiterung, mit Abdeckungserweiterungsstufe 0 oder mit Abdeckungserweiterungsstufe 1 erlaubt ist, und
wobei die Zugangssteuerinformationen anzeigen, dass dem Benutzergerät, das einen Stream-Dienst mit niedriger Rate einleitet, der Zugang zum netzwerkseitigen Netzwerkelement mit der Nicht-Abdeckungserweiterung, der Abdeckungserweiterungsstufe 0, der Abdeckungserweiterungsstufe 1, der Abdeckungserweiterungsstufe 2 oder der Abdeckungserweiterungsstufe 3 erlaubt ist.

2. Verfahren nach Anspruch 1, wobei die Zugangssteuerinformationen mit einem Bereich der Abdeckungserweiterungsstufen verknüpft sind, die einen Direktzugriff durch das Benutzergerät ermöglichen.

3. Zugangssteuerverfahren, das aufweist:
Erhalten (S202) von Zugangssteuerinformationen, die mit mehreren Long-Term-Evolution-, LTE-, Enhanced-Machine-Type-Communication-, eMTC-, Abdeckungserweiterungsstufen verbunden sind, durch ein Benutzergerät; und
Bestimmen (S204), durch das Benutzergerät und gemäß den Zugangssteuerinformationen, ob eine Bedingung zum Einleiten eines Direktzugriffs auf eine Netzwerkseite erfüllt ist,
wobei die Zugangssteuerinformationen anzeigen, dass dem Benutzergerät, das einen Dienst mit hoher Rate einleitet, der Zugang zum netzwerkseitigen Netzwerkelement ohne Abdeckungserweiterung erlaubt ist,
wobei die Zugangssteuerinformationen anzeigen, dass dem Benutzergerät, das einen Stream-Dienst mit üblicher Rate einleitet, der Zugang zum netzwerkseitigen Netzwerkelement mit Nicht-Abdeckungserweiterung, mit Abdeckungserweiterungsstufe 0 oder mit Abdeckungserweiterungsstufe 1 erlaubt ist, und
wobei die Zugangssteuerinformationen anzeigen, dass dem Benutzergerät, das einen Stream-Dienst mit niedriger Rate einleitet, der Zugang zum netzwerkseitigen Netzwerkelement mit der Nicht-Abdeckungserweiterung, der Abdeckungserweiterungsstufe 0, der Abdeckungserweiterungsstufe 1, der Abdeckungserweiterungsstufe 2 oder der Abdeckungserweiterungsstufe 3 erlaubt ist.

4. Verfahren nach Anspruch 3, wobei die Zugangssteuerinformationen mit einem Bereich der Abdeckungserweiterungsstufen verknüpft sind, die den Direktzugriff des Benutzergeräts ermöglichen.

5. Zugangssteuervorrichtung, die auf ein netzwerkseitiges Netzwerkelement angewendet wird, das einen Prozessor aufweist, der konfiguriert ist, ein Verfahren nach einem der Ansprüche 1 oder 2 zu implementieren.

6. Zugangssteuervorrichtung, die auf ein Benutzergerät angewendet wird und einen Prozessor aufweist, der konfiguriert ist, ein Verfahren nach einem der Ansprüche 3 oder 4 zu implementieren.

## Revendications

1. Procédé de commande d'accès, comprenant : la détermination (S 102), par un élément de réseau côté réseau, de la mise en oeuvre d'une commande d'accès pour un équipement utilisateur avec amélioration de la couverture ; et
la transmission (S204), par l'élément de réseau côté réseau, d'informations de commande d'accès associées à plusieurs niveaux d'amélioration de la couverture d'une communication améliorée de type machine, eMTC, dans une évolution à long terme, LTE,
où les informations de commande d'accès sont configurées pour indiquer à l'équipement utilisateur une condition d'initialisation d'un accès aléatoire à l'élément de réseau côté réseau,
où l'accès aléatoire est basé sur un niveau d'amélioration de la couverture parmi la pluralité de niveaux d'amélioration de la couverture autorisés pour l'accès aléatoire de l'équipement utilisateur, et
où les informations de commande d'accès indiquent que l'équipement utilisateur qui initialise un service à haut débit est autorisé à accéder à l'élément de réseau côté réseau sans amélioration de couverture,
où les informations de commande d'accès indiquent que l'équipement utilisateur qui initialise un service à débit commun est autorisé à accéder à l'élément de réseau côté réseau sans amélioration de couverture, avec un niveau 0 d'amélioration de couverture ou un niveau 1 d'amélioration de couverture, et
où les informations de commande d'accès indiquent que l'équipement utilisateur qui initialise un service de flux à faible débit est autorisé à accéder à l'élément de réseau côté réseau sans amélioration de couverture, avec le niveau 0 d'amélioration de couverture, le niveau 1 d'amélioration de couverture, le niveau 2 d'amélioration de couverture ou le niveau 3 d'amélioration de couverture.

2. Procédé selon la revendication 1, où les informations de commande d'accès sont associées à une plage de niveaux d'amélioration de la couverture permettant un accès aléatoire par l'équipement utilisateur.

3. Procédé de commande d'accès, comprenant
l'obtention (S202), par un équipement utilisateur, d'informations de commande d'accès associées à une pluralité de niveaux d'amélioration de la couverture d'une communication améliorée de type machine, eMTC, dans une évolution à long terme, LTE ;
et
la détermination (S204), par l'équipement utilisateur et en fonction des informations de commande d'accès, si une condition d'initialisation d'un accès aléatoire à un côté du réseau est satisfaite,
où les informations de commande d'accès indiquent que l'équipement utilisateur qui initialise un service à haut débit est autorisé à accéder à l'élément de réseau côté réseau sans amélioration de la couverture,
les informations de commande d'accès indiquent que l'équipement utilisateur qui initialise un service à débit commun est autorisé à accéder à l'élément de réseau côté réseau sans amélioration de couverture, avec un niveau 0 d'amélioration de couverture ou un niveau 1 d'amélioration de couverture, et
où les informations de commande d'accès indiquent que l'équipement utilisateur qui initialise un service de flux à faible débit est autorisé à accéder à l'élément de réseau côté réseau sans amélioration de couverture, avec le niveau 0 d'amélioration de couverture, le niveau 1 d'amélioration de couverture, le niveau 2 d'amélioration de couverture ou le niveau 3 d'amélioration de couverture.

4. Procédé selon la revendication 3, où les informations de commande d'accès sont associées à une plage de niveaux d'amélioration de la couverture permettant l'accès aléatoire de l'équipement utilisateur.

5. Dispositif de commande d'accès, appliqué à un élément de réseau côté réseau, comprenant un processeur configuré pour mettre en oeuvre un procédé selon la revendication 1 ou la revendication 2.

6. Dispositif de commande d'accès, appliqué à un équipement utilisateur, comprenant un processeur configuré pour mettre en oeuvre un procédé selon l'une des revendications 3 ou 4.
